# EUROPEAN PATENT APPLICATION

(11) **EP 1 939 759 A1**
(43) Date of publication of application: **02.07.2008**
(21) Application number: 06027109.5
(22) Date of filing: 29.12.2006
(51) Int. Cl.: G06F 17/30, H04L 29/08

(54) **Method for providing content to a mobile device, gateway for providing content and mobile device**

(71) Applicant: Vodafone Holding GmbH, 40213 Düsseldorf (DE)
(72) Inventor: Martin, Maurice, 3620 Ianaken (BE)
(74) Representative: Cullinane, Marietta Bettina

(57) **Abstract**

The present invention relates to a method for providing content to a mobile device (2) within a communication network comprising a network server (4), at least one gateway (3) for a thin client application, at least one management unit (5) comprised by the gateway (3) and at least one mobile device (2), wherein the gateway (3) upon identification of a request from a mobile device (2) transmitted within a thin client application, initiates a download of the requested content from the network server (4) to the gateway (3), wherein the method is characterized in that the gateway (3) upon identification of a specific request within the thin client application additionally triggers a management unit (5) to deliver the content to the mobile device (2). Furthermore a remote display gateway (3) and a mobile device (2) for the usage within the inventive method are described.

## Description

The present invention relates to a method for providing content to a mobile device and a gateway for providing the content to the mobile device as well as to a mobile device.

Typical wireless network architectures are composed of a server computer, a network, and a mobile device, such as a computer, a phone, or a Personal Data Assistant (PDA), etc. On the mobile device a thin client may be installed. A thin client is referred to as a program on a client device which displays a user interface for a server-based application. Thin-clients run minimal or no user application code, i.e. most (if not all) of the application code runs on the server. Examples of thin-clients are Web Browsers, Citrix, X-Windows and PCAnywhere.

A network architecture of a wireless thin-client, server centric system is described in US 2003 / 0065715 A1, which proposes a Mobile Classic Blend ("MCB") wireless system. The MCB wireless system has a server component, client component, and application component for building thin-client wireless applications. The MCB wireless system allows server-centric programming such that developers do not have to write any client code, yet the developers can create a thin-client wireless application that keeps the look-and-feel of a standalone, native PDA application.

When users currently are using a thin client technology based browsing solution for browsing the Internet from a mobile device, all content which is downloaded will be stored at the remote server and will only be displayed on the mobile device. The known thin client technology for browsing may comprise Microsoft RDP, CITRIX etc.

The disadvantage of the known solutions is the lack of availability of downloaded content on the mobile device itself.

The problem to be solved by the present invention is thus to provide a possibility for the user of the mobile device to obtain specific content on the mobile device itself.

According to a first aspect, the problem is solved by a method for providing content to a mobile device within a communication network comprising a network server, at least one gateway for a thin client application, at least one management unit comprised by the gateway and at least one mobile device, wherein the gateway upon identification of a request from a mobile device transmitted within a thin client application, initiates a download of the requested content from the network server to the gateway. The method is characterized in that the gateway upon identification of a specific request within the thin client application additionally triggers the management unit to deliver the content to the mobile device.

Content to be delivered to the mobile device may include applications, such as games, and /or data files such as audio or video data files, e.g. ring tones or pictures. The mobile device to be used in the present invention is preferably a device, which communicates with entities of a communication network, especially the Internet, via communication protocol different from the network protocol. As such, mobile devices may include mobile phones or laptops being connected to the communication network via a network such as GSM or UMTS. The communication network comprises a number of entities and according to the present invention at least one network server, where content or paths, i.e. links, to content on other servers are stored. In particular the network server hosts web sites.

Furthermore, a gateway is provided, which is interposed between the network server and the mobile device. The gateway comprises or represents a remote display gateway, which servers for delivering display data to the mobile device. On the gateway a server based application is installed, which preferably is a browser for browsing web sites on the Internet. The remote display gateway also serves for receiving and processing requests from the mobile device. These requests are being issued by the mobile device from within a thin client application on the mobile device.

The thin client application, which will hereinafter also be referred to as the thin client, is preferably a program installed on mobile device for remote access to a server based application installed on the gateway for display of the user interface of the server based application on the mobile device. The requests, which can be issued by the mobile device, hence include selections of options displayed on the mobile device. The mobile device with the thin client application installed thereon serves as a mere input and output device for a server based application running on the remote gateway.

The management unit provided according to the present invention may be connected to the gateway, in particular the remote display gateway or may form part of the gateway. The management unit may for example be a software program installed on the gateway or a separate server. The remote display gateway may also be a software program installed on the gateway.

Within the server based application options may be available, e.g. to display a web page with a given URL. From the mobile device a request to display such a website is the mere instruction for the gateway to perform the required actions. The request at the mobile device may be generated by selecting, for example by means of a cursor at the mobile device, a displayed link or by entering a URL Address via the key board of the mobile device. The request will result in the gateway obtaining the requested information or data and displaying the same to the user via the thin client. Once the gateway identifies such a request for display of data or information, it will download the necessary content to the gateway and will transmit display data and information for display to the mobile device.

The specific request within the thin client application, which will result in the triggering of a management unit, preferably is the selection of an option within the server based application, which offers the transmission of content to the mobile device. This option may be the offer to download a game to a mobile phone. The identification of such a specific request can be performed at the gateway by monitoring requests or instructions issued within the thin client application and monitoring the option within the server based application to be selected by the requests. If the gateway identifies, that the option includes transmission of content to the mobile device, i.e. not the mere display of content at the mobile device, it may trigger the management unit.

The management unit is preferably a download management unit. Once the management download unit is triggered by the gateway, it will manage the download of the content from the gateway to the mobile device.

With the present invention it will hence be possible to provide content to a mobile device from within a thin client application. By using a thin client on the mobile phone the processing power to obtain the display of a browser on the mobile device is very low. By also providing the providing of content to the mobile device from within this thin client application, it will be possible for the user to have the same browsing experience as on a mobile device where the browser itself is being installed. In addition, content requested from individual web sites will be available at the mobile device itself for subsequent usage. As the content will be downloaded to the mobile device it will be available regardless of a connection to the gateway.

According to one embodiment, the gateway transmits information to the mobile device about the status of the management unit. This status information may in particular be information that a delivery of content to the mobile device has been and/or will be initiated. This embodiment is advantageous; since the user will be informed that content will be downloaded to his device and may intercept the download process, if for example the selection of the download option was done erroneously.

Preferably the delivery of the content from the gateway to the mobile device is performed via the communication connection of the mobile device to the gateway which is used for the thin client application.

The connection, which is for example established via a cellular communication network, is already existent and thus initiation steps for initiating a communication can be avoided. The provision of the content to the mobile device may thus be preformed within a minimal time after the user has chosen the download option.

Alternatively to using an existing communication connection, the management unit may establish a communication connection with the mobile device for delivery of content in absence of an existing communication connection.

The communication connection from the mobile device to the gateway may have been dropped due to network problems or may have been terminated by the user. In either case, the management unit may establish a connection to the mobile device for delivery of the requested content. The connection is preferably established via a mobile radio network, in particular a cellular mobile network. The technologies to be used to transmit the content via this connection may include WAP-Push and may employ Session Initiation Application (SAI).

A copy of the content may be kept on the gateway while one copy is being delivered to the mobile device.

This embodiment will in particular be advantageous, if the download to the mobile device fails. With the copy of the content being stored at the gateway, a new download from the gateway via the management unit can be initiated.

According to a further aspect, the present invention relates to a gateway for providing content to at least one mobile device of a communication network wherein the gateway comprises a remote display gateway for providing display data for displaying content on a mobile device within a thin client application. The gateway is characterized in that it comprises a management unit for managing the delivery of content from the gateway to at least one mobile device.

The management unit may be comprised by the remote display gateway, e.g. may be installed on a common server with the remote display gateway, or may be connected to the remote display gateway. The management unit servers for initiating and managing a download of content to a mobile device. The management may further serve for establishing a communication connection to the mobile device for delivery of the content. Finally, the management unit may serve to negotiate with the mobile device on device capacities and / or on the storage location of the content to be downloaded.

By providing a download management extension to a display gateway, it will be possible to transfer content to a mobile device which is only connected to the display gateway via a thin client application, i.e. wherein only display data is being transmitted to the mobile device from the remote display gateway.

The gateway may comprise a control unit for triggering the management unit to deliver content to the at least one mobile device. The control unit may in particular serve for monitoring requests from the mobile device within the thin client application and comparing the request with options selected by the request within a server based application installed on the gateway. Thereby the management unit will only be triggered if an action, which can not be performed within the thin client application, is being requested. In particular, the management unit will only be triggered, if instead of the display of content at the mobile device, the download of the content to the mobile device is requested.

The gateway may further comprise an information generation unit for generating information to be transmitted to the mobile device containing information on the status of the management unit. The generated information may be transmitted to the mobile device by mere display. This means the user will receive the information within the thin client application. The information may be status information on the status of the download of content to the mobile device. In addition, the information may comprise negotiation invitations, such as an invitation to the user to provide an indication of available memory space on the mobile. The negotiation invitations may be generated based on information received from the management unit.

According to another aspect, the present invention relates to a mobile device of a mobile communication network comprising a client for displaying information from a remote gateway. The mobile device is characterized in that it further comprises a download management client for communicating with a management unit of a remote gateway.

The clients may be applications installed on the mobile device. The communication of the management client with the management unit may comprise the negotiation on device capabilities and / or storage location of content to be downloaded to the mobile device.

By providing a download management client on the mobile device, the receipt of content at the mobile device in addition to the mere display of display data received from the remote gateway, in particular a remote display gateway will be possible.

The management client preferably serves for receiving content delivered via the management unit. The content may be stored in the remote gateway.

The mobile device is preferably a mobile phone. With these devices the minimal usage of processing power and memory space is important and the present invention can thus be applied advantageously.

Features and advantages which are described with respect to the inventive method also apply to the gateway and/or mobile device and vice versa.

The invention will now be described again with reference to the enclosed figures, wherein:
Fig. 1: shows a schematic view of a system to be used for the present invention;
Fig. 2: shows a flow chart of one embodiment of the inventive method; and
Fig. 3: shows a flow chart of a second embodiment of the inventive method.

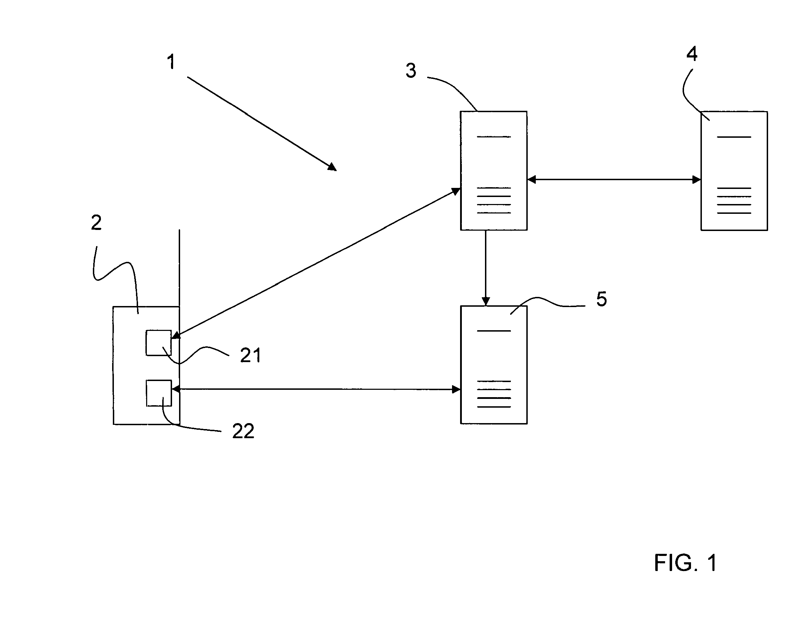

The system 1 shown in Figure 1 comprises mobile device, depicted as a mobile phone 2. On the mobile phone 2 a remote display client 21 and a download client 22 are provided. These clients 21, 22 may be software installed on the mobile phone 2. The system 1 further comprises a remote display gateway 3. The remote display gateway 3 is connected to or can access a network server 4, which might host a website or a portal. In addition, in the depicted system 1, the remote display gateway 3 is connected to a download manager 5, which can also be referred to as a management unit. The download manager 5 can communicate with the download client 22 on the mobile phone 2.

The display client 21 on the mobile phone 2 is a thin client application, i.e. allows remote access and display of a server based application, such as a browser, installed and running on the gateway 3. The user may use the thin client application to browse sites on the Internet. This browsing is performed by the remote display gateway 3. The content to be displayed to the user via the remote display client 21 is downloaded by the remote display gateway 3 from a network server 4. The thus available content will be made available for display on the mobile phone 2. The content itself, however, resides at the remote display gateway 3 or even the network server 4. In the latter case, only data necessary for displaying the content, for example a homepage is provided to the remote display gateway 3.

The thin client based browsing is thus performed by the remote display gateway 3, but can be manipulated via the mobile phone 2.

While browsing, the user may identify pieces of content, which he would like to use. Such content may be applications, such as games or ring tones, or files such as pictures, e.g. to be used as wall paper for the screen or as icons. As such content should be available at the mobile phone 2, even if no connection to the browser on the remote display gateway 3 exists, the content should be delivered or provided to the mobile phone 2 to be stored there. Normal remote display clients are not designed to support such a delivery to the mobile phone 2, as their functionality is restricted to display data received from the remote display gateway 3.

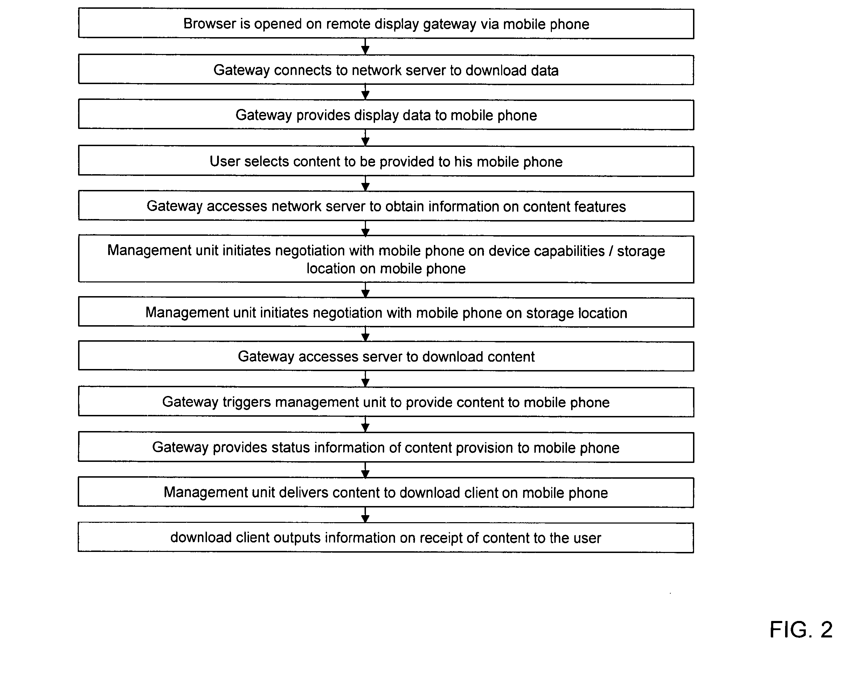

A first example of the inventive method will now be described with reference to Figure 2.

A user initiates a thin client application and for example accesses a browser on a remote display gateway 3. If the user selects a link, for example to a specific web site, the remote display gateway 3 will connect to the network server 4, from which data should be retrieved and displayed to the user. The network server 4 may be a portal, allowing access to various data bases and other resources. The data from the network server 4 will be displayed to the user via the remote display gateway 3, which forwards the necessary display data to the remote display client 21 on the mobile phone 2.

If the user selects a piece of content to be delivered to his mobile phone 2, e.g. clicks on a link to download a game or a ring tone, a respective signal will be received at the remote display gateway 3. This specific request may be identified at the remote display gateway 3 by monitoring the actions behind the requests from the user.

Optionally, the remote display gateway 3 may create a request, whether the content is to be provided to the mobile phone 2 or whether the user only wishes to view and use the content remotely, i.e. via the remote display gateway 3.

In the embodiment shown in Figure 2, the remote display gateway 3 will, upon receipt of the download order or confirmation to download the content to the mobile phone 2 from the user, access the network server 4 to obtain information on features of the content to be downloaded. The information on the features of the content may include the size of the content file, the requirements for storing and executing an application contained in the content file and so on.

Based on the obtained information, the management unit 5 will initiate negotiations with the mobile phone 2, from which the download request originated, in particular with a download client 22 on the mobile phone 2. The device capabilities may be determined, to assure that the content to be downloaded or transferred to the mobile device 2 is supported by the mobile device 2. If the content is for example am mp3 file, it can be confirmed whether the mobile phone is equipped with an mp3 player. Otherwise the download of the content to the mobile phone does not seem reasonable. The management unit 5 may also interrogate whether the memory space necessary to store and run the content on the mobile phone 2 is sufficient for the requested content. In a subsequent or alternative step the management unit 5 may initiate negotiations on the storage location for the content, to ensure that the content will be stored at an appropriate location. For example, ring tones have to be stored at a certain location, as they will otherwise not be recognized by the program on the mobile phone 2 accessing the ring tones.

Once the assessment of device capabilities and, if appropriate, storage location is finalized and the requirements are met, the remote display gateway 3 will access the network server 4 to download the requested content. Simultaneously or subsequently, the remote display gateway 3 will trigger the download management unit 5 to provide the content to the mobile phone 2. At the same time or subsequently the remote display gateway 3 will provide information to the mobile phone 2 to inform the user that the download, i.e. the delivery of the content to the mobile phone 2 has been started.

The download management unit 5 transmits the content to the mobile phone 2 using the connection, which was originally established by the user via the mobile phone 2. In particular, a connection via the Internet exists and allows the download management unit 5 to deliver the content to the mobile phone 2. If the connection to the mobile phone 2 is dropped, the download management unit 5 will detect the lack of connectivity and may initiate a communication to the mobile phone 2 via a different channel. In particular, the download management unit 5 may use WAP-push technology to deliver the content to the mobile phone 2. In this case the mandatory address, e.g. MSISDN of the mobile phone 2, may be obtained from the remote display gateway 3. It is also possible that the remote display gateway 3, when triggering the download management unit 5 to initiate the download, transfers the address of the mobile phone 2, which may then be stored at the download management unit 5 until downloading of the content to the mobile phone 2 has been completed successfully.

Once the content has been delivered to the mobile phone 2, the download client 22 on the mobile phone 2 will output information on the receipt of the content to the user. This output may be an acoustic or visual output at the mobile phone 2.

While the download management unit 5 is managing the download of requested content to the download client 22 on the mobile phone 2, the user can still use the remote display client 21 to view content or browse sites via the remote display gateway 3.

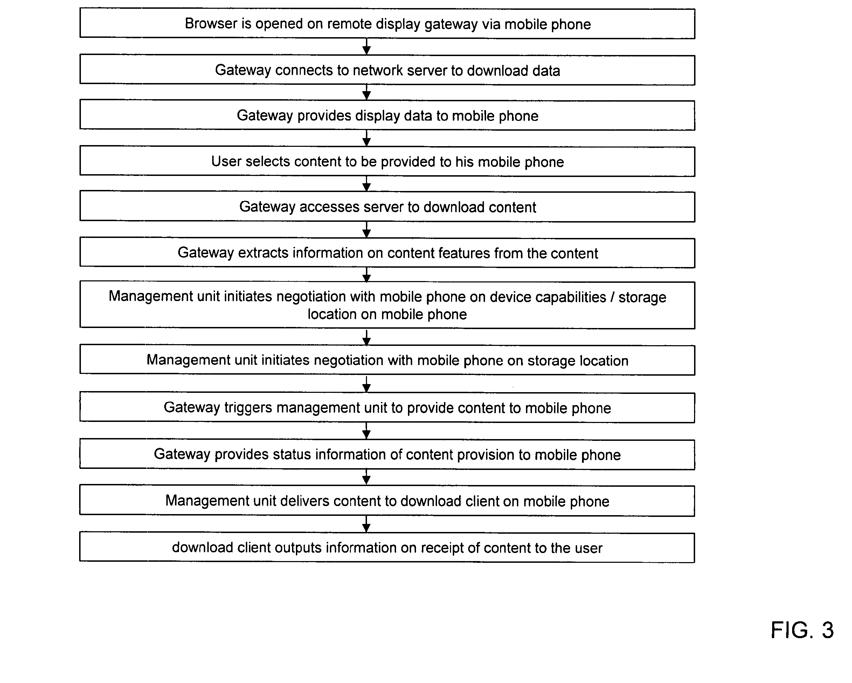

In Figure 3 an alternative embodiment of the inventive method is shown. The initial steps of this embodiment correspond to the steps performed in the embodiment shown in Figure 1. In the second embodiment, however, the remote display gateway 3 initiates the download of the content to the remote display gateway 3 from the network server 4 without obtaining the feature information on the content beforehand. In this embodiment, the remote display gateway 3 or management unit 5 extracts information on content features from the content received from the network server 4. The thus extracted information is used as the basis for negotiating with the mobile phone 2 device capacities and/ or storage location on the mobile phone 2. The remaining steps of the embodiment in Figure 2 correspond to the steps of the first embodiment, i.e. the download management unit 5 is triggered by the remote display gateway 3, status information is provided to the mobile phone 2 and the content is delivered by the download management unit 5 to the download client 22 on the mobile phone 2. Finally, information on the performed download is output to the user at the mobile phone 2.

It should be noted that the present invention is not limited to the embodiments shown in the figures. The process may for example also be performed without negotiation with the mobile phone. In that case, the content will be downloaded regardless of the device capabilities of the mobile phone. If the capabilities are not sufficient, the content will not be executable at the mobile phone.

According to the present invention the user may benefit from thin client based browsing of the Internet via his mobile phone. In particular fast response times can be realized and the processing power required at the mobile phone is low. In addition, the user may, however, also download content directly to his phone from within the thin client application. Hence, the present invention provides an enhanced user experience.

## Claims

1. Method for providing content to a mobile device (2) within a communication network comprising a network server (4), at least one gateway (3) for a thin client application, at least one management unit (5) comprised by the gateway (3) and at least one mobile device (2), wherein the gateway (3) upon identification of a request from a mobile device (2) transmitted within a thin client application, initiates a download of the requested content from the network server (4) to the gateway (3), **characterized in that** the gateway (3) upon identification of a specific request within the thin client application additionally triggers a management unit (5) to deliver the content to the mobile device (2).

2. Method according to claim 1, **characterized in that** the gateway (3) transmits information to the mobile device (2) about the status of the management unit (5), in particular that a delivery of content to the mobile device (2) has been and/or will be initiated.

3. Method according to claim 1 or 2, **characterized in that** the delivery of the content from the gateway (3) to the mobile device (2) is performed via the communication connection of the mobile device (2) to the gateway (3) which is used for the thin client application.

4. Method according to anyone of claim 1 to 3, **characterized in that** the management unit (5) establishes a communication connection with the mobile device (2) for delivery of content in absence of an existing communication connection.

5. Method according to anyone of claims 1 to 4, **characterized in that** a copy of the content is being kept on the gateway (3) while one copy is being delivered to the mobile device (2).

6. Gateway for providing content to at least one mobile device (2) of a communication network wherein the gateway (3) comprises a remote display gateway for providing display data for displaying content on a mobile device (2) within a thin client application, **characterized in that** the gateway (3) comprises a management unit (5) for managing the delivery of content from the gateway (3) to at least one mobile device (2).

7. Gateway according to claim 6, **characterized in that** the gateway (3) comprises a control unit for triggering the management unit (5) to deliver content to the at least one mobile device (2).

8. Gateway according to claim 6 or 7, **characterized in that** the gateway (3) comprises an information generation unit for generating information to be transmitted to the mobile device (2) containing information on the status of the management unit (5).

9. Gateway according to anyone of claims 6 to 8 for use in a method according to anyone of claims 1 to 5.

10. Mobile device of a mobile communication network comprising a client (21) for displaying information from a remote gateway (3), **characterized in that** it further comprises a download management client (22) for communicating with a management unit (5) of a remote gateway (3).

11. Mobile device according to claim 9, **characterized in that** the management client (22) serves for receiving content delivered via the management unit (5).

12. Mobile device according to claim 10 or 11 for use in a method according to anyone of claims 1 to 5.
